# EUROPÄISCHE PATENTSCHRIFT

(11) **EP 2 183 071 B1**
(45) Veröffentlichungstag und Bekanntmachung des Hinweises auf die Patenterteilung: **16.05.2012**
(21) Anmeldenummer: 08801670.4
(22) Anmeldetag: 21.08.2008
(51) Int. Cl.: B23B 51/02

(54) **BOHRER**
DRILL
FORET

(30) Priorität: 25.08.2007 DE 102007040178
(43) Veröffentlichungstag der Anmeldung: 12.05.2010
(73) Patentinhaber: MAPAL Fabrik für Präzisionswerkzeuge Dr. Kress KG, 73431 Aalen (DE)
(72) Erfinder: KRENZER, Ulrich, 90513 Zirndorf (DE)
(74) Vertreter: Gleiss, Alf-Olav
(86) Internationale Anmeldenummer: PCT/EP2008/006898
(87) Internationale Veröffentlichungsnummer: WO 2009/027055

(56) Entgegenhaltungen:
- DE-A1- 19 602 566
- DE-U1- 20 312 819
- GB-A- 2 417 447
- JP-A- 1 140 908
- US-A1- 2007 160 437

## Beschreibung

Die Erfindung betrifft einen Bohrer gemäß Oberbegriff des Anspruchs 1. Ein solcher Bohrer ist aus der US - 2007/0160437 bekannt.

Bohrer der hier angesprochenen Art sind bekannt. Sie weisen an ihrer Stirnseite mindestens zwei Hauptschneiden auf, die in an dem Umfangsbereich der Bohrer vorgesehene Nebenschneiden übergehen. Die Hauptschneiden werden durch aneinandergrenzende Span- und Freiflächen gebildet, wobei die Spanflächen in Drehrichtung des Bohrers abfallen und die Freiflächen in entgegengesetzter Richtung. In der Regel wird der Bohrer in Rotation versetzt und mit einem Werkstück in Eingriff gebracht. Denkbar ist es aber auch, das Werkstück in Rotation zu versetzen und den Bohrer drehfest zu halten. In diesem Fall weisen die Spanflächen in die entgegen gesetzte Richtung, in welcher das Werkstück dreht. Auf den Spanflächen laufen die von der mindestens einen Hauptschneide abgetragenen Späne ab. Im Bereich der Mittelachse des Bohrers ergibt sich eine Querschneide, an welche die beiden stirnseitigen Hauptschneiden angrenzen. Bohrer der hier angesprochenen Art werden üblicherweise mit einem relativen Kerndurchmesser von 10% bis 35% des Bohrdurchmessers gefertigt. Bei einem Kerndurchmesser größer 20% ist es erforderlich, die Querschneide, welche die beiden Hauptschneiden verbindet, durch eine sogenannte Ausspitzung zu verkürzen. Durch diese Ausspitzung werden Zentrums-Schneiden gebildet, die üblicherweise mit der Hauptschneide einen stumpfen Winkel einschließen. Je kleiner dieser Winkel ist, desto kürzer und in der Regel schnittfreudiger fallen diese Zentrums-Schneiden aus. Die Ausspitzung führt auch dazu, dass die den Hauptschneiden zugeordneten Spanflächen mit den Zentrums-Schneiden zugeordneten Spanflächen einem stumpfen Winkel einschließen. Bei konventionellen Bohreranschliffen mit durchgehender Freifläche ergibt sich zwangsläufig im Bereich der Zentrums-Schneide ein größerer Spitzenwinkel als im Bereich der Hauptschneide. Es hat sich herausgestellt, dass bei einer derartigen Ausgestaltung des Bohrers von den Schneiden abgetragene Späne verdichtet werden und nicht frei abfließen können. Dadurch wird die Bohrleistung reduziert. Es können sich auch Beschädigungen des Bohrers ergeben.

Aufgabe der Erfindung ist es daher, einen Bohrer zu schaffen, der die hier genannten Nachteile vermeidet.

Zur Lösung dieser Aufgabe wird ein Bohrer vorgeschlagen, welcher die in Anspruch 1 genannten Merkmale aufweist. Dieser Bohrer umfasst mindestens zwei stirnseitige Hauptschneiden mit sich daran anschließenden außen liegenden Nebenschneiden, die im Bereich der Umfangsfläche des Bohrers angeordnet sind. An die Hauptschneide grenzen sowohl Spanflächen als auch erste Freiflächen an, die entgegengesetzt geneigt sind. Die Spanflächen sind in Drehrichtung des Bohrers geneigt, die ersten Freiflächen in entgegengesetzter Richtung. Die mindestens zwei Hauptschneiden des Bohrers werden durch die Schnittlinie der Spanflächen mit den ersten Freiflächen gebildet. Außerdem sind mindestens zwei Zentrums-Schneiden mit Spanflächen vorgesehen, die mit den Spanflächen der Hautschneiden einen stumpfen Winkel einschließen. Der Bohrer zeichnet sich dadurch aus, dass auch die ersten Freiflächen Teilabschnitte aufweisen, welche in einem stumpfen Winkel zueinander angeordnet sind, wobei die Anzahl der der ersten Freiflächen der Anzahl der Teilabschnitte der Spanflächen entspricht. Die mindestens zwei Zentrums-Schneiden und Hauptschneiden fallen von der Querschneide aus gesehen unter einem konstanten Spitzenwinkel α nach außen in Richtung auf die Umfangsfläche des Bohrers, also in Richtung auf die Nebenschneiden ab.

Ein bevorzugtes Ausführungsbeispiel des Bohrers zeichnet sich dadurch aus, dass die innen liegenden Spanflächen der Zentrums-Schneiden weniger geneigt sind als die weiter außen liegenden Spanflächen der Hauptschneide. Letztere verläuft in einer Ebene, in der auch die Mittel- oder Drehachse des Bohrers liegt. Die innen liegende Spanfläche schließt mit einer Ebene, auf der die Mittelachse senkrecht steht, vorzugsweise einen spitzen Winkel ein.

Bei einem bevorzugten Ausführungsbeispiel des Bohrers ist vorgesehen, dass die innen liegende Spanfläche der Zentrums-Schneide über einen Knick oder über einen Bogen in die außen liegende Spanfläche der Hauptschneide übergeht. Auf diese Weise kann der Spanablauf in einem weiten Bereich beeinflusst werden.

Bei einem weiteren bevorzugten Ausführungsbeispiel ist vorgesehen, dass der innen liegende Teilabschnitt der ersten Freifläche stärker geneigt ist als der außen liegende Teilabschnitt, das heißt, ausgehend von der Mittelachse des Bohrers fällt der innen liegende erste Teilabschnitt der Freifläche stärker in Richtung zur Umfangsfläche des Bohrers ab als der außen liegende, an die Umfangsfläche des Bohrers heranreichende Teilabschnitt der Freifläche.

Ein besonders bevorzugtes Ausführungsbeispiel des Bohrers zeichnet sich dadurch aus, dass der Freiwinkel der ersten Freiflächen vom Zentrum des Bohrers aus gesehen, also von der Mittelachse aus, nach außen kleiner wird. Vorzugsweise verringert sich der Freiwinkel stetig.

Bei einem weiteren bevorzugten Ausführungsbeispiel des Bohrers ist vorgesehen, dass sich an die mindestens erste Freifläche, welche an die Hauptschneide angrenzt, eine zweite Freifläche anschließt. Diese ist stärker geneigt als die erste Freifläche, ihr Freiwinkel ist also größer als der der ersten Freifläche.

Besonders bevorzugt wird ein Ausführungsbeispiel des Bohrers, bei dem die zweite Freifläche, ähnlich wie die erste Freifläche Teilabschnitte aufweist, die entsprechend den Teilabschnitten der ersten Freifläche - in radialer Richtung des Bohrers gesehen - unterschiedlich geneigt sind und über einen Knick beziehungsweise einen Bogen ineinander übergehen.

Weitere Ausgestaltungen des Bohrers ergeben sich aus den Unteransprüchen.

Die Erfindung wird im Folgenden anhand der Zeichnung näher erläutert. Es zeigen:
- Figur 1: einen Bohrer in Stirnansicht mit einem konventionellen Anschliff ohne Ausspitzung;
- Figur 2: einen Bohrer in Stirnansicht mit einem konventionellen Anschliff sowie mit einer Ausspitzung;
- Figur 3: einen Bohrer sowohl in Stirn- als auch in Seitenansicht mit einem erfindungsgemäßen Anschliff;
- Figur 3a: eine erste Seitenansicht des in Figur 3 dargestellten Bohrers;
- Figur 3b: eine zweite Ansicht des in Figur 3 dargestellten Bohrers;
- Figur 4: ein abweichendes Ausführungsbeispiel eines Bohrers in Stirn- und Seitenansicht mit einer bogenförmigen Schneide;
- Figur 4a: eine erste Seitenansicht des in Figur 4 dargestellten Bohrers;
- Figur 4b: eine zweite Seitenansicht des in Figur 4 dargestellten Bohrers und
- Figur 5: ein weiteres abgewandeltes Ausführungsbeispiel eines erfindungsgemäßen Bohrers mit einem spitzen Winkel von 180°.

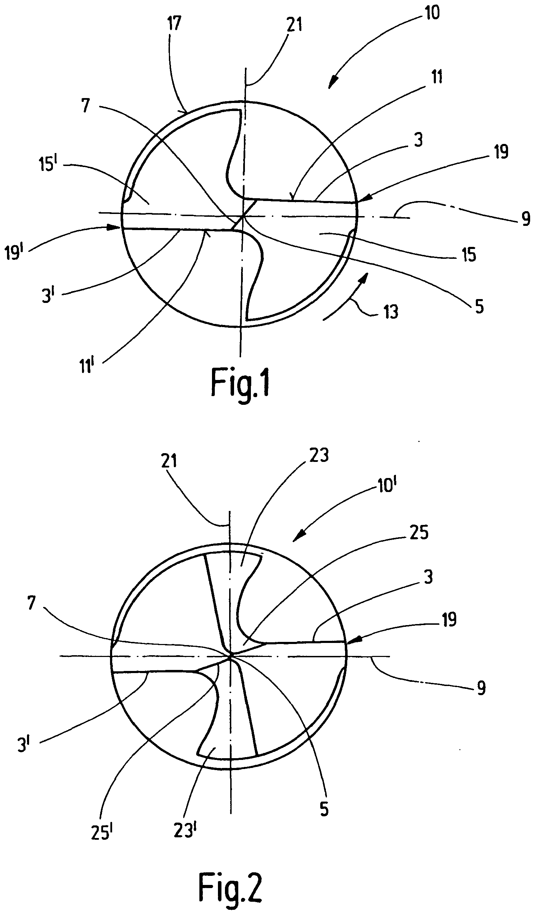

Der in Figur 1 in Stirnansicht dargestellte bekannte Bohrer 10 weist eine erste Hauptschneide 3 und eine punktsymmetrisch zur Mittelachse 5 des Bohrers angeordnete zweite Hauptschneide 3' auf. Die beiden Hauptschneiden 3, 3' werden durch eine durch die Mittelachse 5 verlaufende Querschneide miteinander verbunden. Die beiden Hauptschneiden 3, 3' sind parallel zu einer Durchmesserlinie 9 angeordnet, die in Figur 1 horizontal durch die Mittelachse 5 verläuft. Der ersten Hauptschneide 3 ist eine senkrecht zur Bildebene von Figur 1 verlaufende Spanfläche 11 zugeordnet, der zweiten Hauptschneide 3' eine entsprechende Spanfläche 11'.

Die Spanflächen 11, 11' sind in der durch einen Pfeil 13 angedeuteten Drehrichtung des Bohrers 10 gesehen in Richtung der Drehrichtung geneigt. An die Hauptschneiden 3, 3' schließen sich Freiflächen 15, 15' an, die in entgegengesetzter Richtung abfallen und damit entgegen der durch den Pfeil 13 angedeuteten Drehrichtung geneigt sind.

Die Hauptschneiden 3, 3' gehen in im Bereich der Umfangsfläche 17 des Bohrers angeordnete Nebenschneiden 19, 19' über, die in Figur 1 senkrecht zur Bildebene verlaufen. Die Nebenschneiden können parallel zur Mittelachse 5 des Bohrers ausgerichtet sein oder aber entlang einer gedachten Schraubenlinie verlaufen.

Figur 1 zeigt, dass die Querschneide 7 mit einer senkrecht zur Durchmesserlinie 9 verlaufenden Durchmesserlinie 21 einen spitzen Winkel einschließt. Im Bereich dieser Querschneide 7 ergeben sich schlechte Schneideigenschaften des Bohrers, sodass diese möglichst kurz sein sollte. Dies wird durch eine Ausspitzung erreicht, die aus Figur 2 ersichtlich ist.

Figur 2 zeigt einen bekannten Bohrer 10' in Stirnseitenansicht. Gleiche und funktionsgleiche Teile sind mit gleichen Bezugsziffern versehen, sodass insofern auf die Beschreibung zu Figur 1 verwiesen wird.

Der in Figur 2 dargestellte Bohrer 10' ist grundsätzlich so aufgebaut wie der anhand von Figur 1 erläuterte. Er unterscheidet sich ausschließlich dadurch, dass in dessen Stirnseite Abflachungen 23, 23' eingebracht sind, die sich bis nahe an die Mittelachse 5 des Bohrers erstrecken und die Teile der Hauptschneide 3, 3' und insbesondere der Querschneide 7 erfassen. Die Hauptschneide 3 verläuft nicht mehr durchgehend geradlinig von der Nebenschneide 19 bis zur Querschneide 7. Sie fällt in einem Abstand zur Durchmesserlinie 21 unter einem spitzen Winkel zur Durchmesserlinie 9 ab. Dasselbe gilt für die zweite Hauptschneide 3'.

Durch die Abflachungen 23, 23' ergeben sich also gegenüber der Durchmesserlinie 9 abfallende Schneidenbereiche der Hauptschneiden, die auch als Zentrums-Schneiden bezeichnet werden, die zu den Hauptschneiden 3, 3' unter einem stumpfen Winkel verlaufen. Je kleiner dieser Winkel ist, desto kürzer und in der Regel schnittfreudiger fallen diese Zentrums-Schneiden aus. Andererseits ergibt sich aber durch eine derartige durch die Abflachung 23, 23' gegebene Ausspitzung eine Vergrößerung des Spitzenwinkels der Zentrums-Schneiden gegenüber dem Spitzenwinkel der Hauptschneiden. Die Vergrößerung des Spitzenwinkels im Zentrumsbereich hat einen stark negativen Einfluss auf das Zentrierverhalten des Bohrers, insbesondere während der Anbohrphase, was zu einem Verlaufen des Bohrers führen kann. Verläuft ein Bohrer bereits beim Anbohren, kann er sich auch beim nachfolgenden Vollbohrprozess nicht mehr stabilisieren, weil seine Führungsfasen ihn in dieser zur Drehachse versetzten Position halten. Dadurch wirken sehr hohe Normalkräfte auf die Führungsfasen des Bohrers und auch auf die zwischen den Haupt- und Nebenschneiden liegenden Schneidecken, was die Standzeit des Bohrers stark vermindert.

Überdies ergibt sich am Knickpunkt der Hauptschneide 3, 3' eine Verdichtung der von einem Werkstück abgetragenen Späne, sodass diese nicht frei abfließen können.

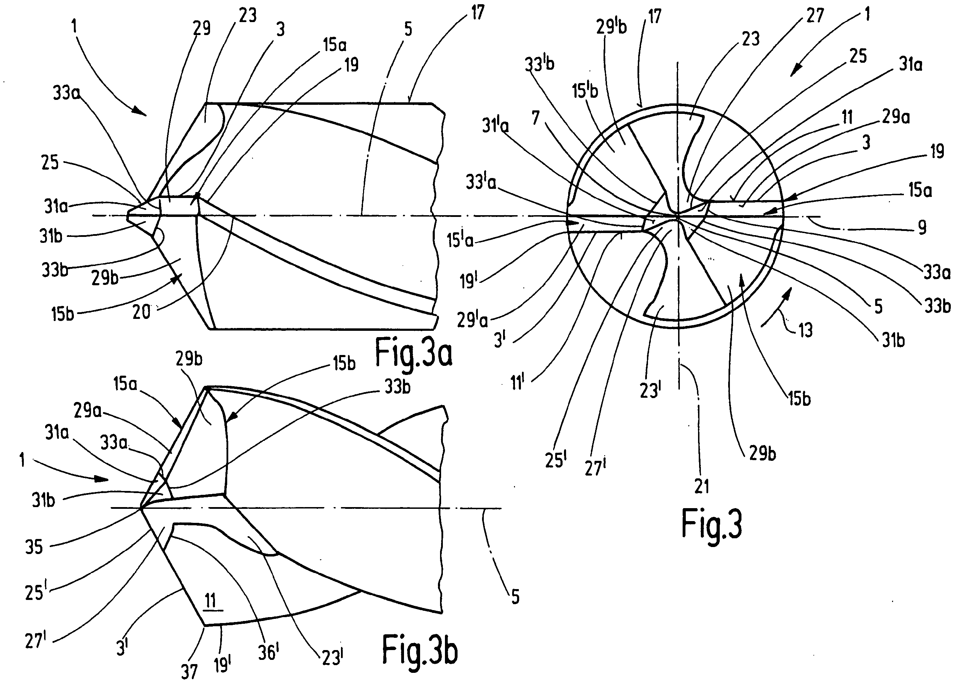

Figur 3 zeigt einen erfindungsgemäßen Bohrer 1 in Stirnansicht. Das vordere Ende des Bohrers 1 ist in Figur 3a in Seitenansicht dargestellt. Ausgehend von der Stirnansicht handelt es sich hier um eine Ansicht von rechts.

In Figur 3b ist die Vorderseite des Bohrers 1 in einer Seitenansicht dargestellt, die gemäß der Stirnansicht gemäß Figur 3 eine Ansicht von unten wiedergibt. Gleiche und funktionsgleiche Teile sind mit gleichen Bezugsziffern versehen, sodass in sofern auf die Beschreibung zu den Figuren 1 und 2 verwiesen wird.

Der Bohrer 1 weist demnach eine erste Hauptschneide 3 und eine zweite Hauptschneide 3' auf, die zueinander punktsymmetrisch bezüglich der Mittelachse 5 des Bohrers angeordnet sind. In der durch den Pfeil 13 dargestellten Drehrichtung gesehen, schließt sich an die Hauptschneiden 3 und 3' die erste und zweite Spanfläche 11, 11' an. Diese sind in Drehrichtung geneigt. Auch der in Figur 3 dargestellte Bohrer weist sich an die Hauptschneiden 3 und 3' anschließende erste Freiflächen 15a, 15'a auf, die von der ersten Hauptschneide 3, 3' ausgesehen, gegen die Drehrichtung abfallen.

Bei dem Bohrer 1 sind, wie bei dem bekannten Bohrer 10' gemäß Figur 2 auch als Ausspitzung bezeichnete, Abflachungen 23, 23' vorgesehen, die bis nahe an die Mittelachse 5 heranreichen und daher die Querschneide 7 gegenüber dem bekannten Bohrer gemäß Figur 1 stark verkürzen. Sie führen auch dazu, dass die erste Hauptschneide 3 ausgehend von der Nebenschneide 19 zunächst parallel zur Durchmesserlinie 9 verläuft und sich dann unter einem spitzen Winkel zu dieser Durchmesserlinie 9 fortsetzt. Es ergibt sich also auch hier eine Zentrums-Schneide 25. Entsprechendes gilt für die zweite Hauptschneide 3', bei der durch die Abflachung 23' eine Zentrums-Schneide 25' gebildet wird.

Die der ersten Hauptschneide 3, 3' zugeordneten Spanflächen 11, 11' verlaufen senkrecht zur Bildebene von Figur 3, während die dem inneren Teil der Hauptschneiden zugeordneten Spanflächen, also die den Zentrums-Schneiden 25, 25' zugeordneten Spanflächen 27, 27' zwar ebenfalls in Richtung der durch den Pfeil 13 angedeuteten Drehrichtung abfallen, aber unter einem wesentlich flacheren Winkel. Die beiden Teilabschnitte der Spanfläche schließen einen stumpfen Winkel ein.

Aus Figur 3 ist ersichtlich, dass die ersten Freiflächen 15a, 15'a zwei Teilabschnitte 29a und 31a aufweisen, die unter einem stumpfen Winkel zueinander geneigt sind. Der sich an die Umfangsfläche 17 anschließende erste Teilabschnitt 29a erstreckt sich über den Bereich der ersten Hauptschneide 3, der im Wesentlichen parallel zur Durchmesserlinie 9 verläuft. Der zweite Teilabschnitt 31a der ersten Freifläche 15a schließt sich nach innen an den ersten Teilabschnitt 29a an und erstreckt sich über den zweiten Teil der ersten Hauptschneide, nämlich über den Bereich der Zentrums-Schneide 25. Die beiden Teilabschnitte 29a und 31a schließen einen stumpfen Winkel ein, wobei der innere zweite Teilabschnitt 31a von der Mittelachse 5 aus gesehen steiler nach außen zur Umfangsfläche abfällt, als der äußere erste Teilabschnitt 29a. Die beiden Teilabschnitte 29a und 31a sind durch eine Knicklinie 33a voneinander getrennt. Bezüglich der zweiten Hauptschneide 3' ergeben sich die gleichen Verhältnisse. Daher wird auf die Erläuterungen zur ersten Hauptschneide 3 verwiesen.

Die Durchmesserlinie 9 trennt die ersten Freiflächen 15a, 15'a von zweiten Freiflächen 15b, 15'b, die gegenüber einer gedachten Ebene, auf der die Mittelachse 15 senkrecht steht und die mit der Bildebene von Figur 3 zusammenfällt, stärker geneigt sind als die ersten Freiflächen 15a, 15'a. Der Freiwinkel ist hier also größer als im Bereich der ersten Freiflächen.

Die zweiten Freiflächen 15b, 15'b sind entsprechend ausgebildet wie die ersten Freiflächen 15a, 15'a: Die zweiten Freiflächen 15b, 15'b weisen jeweils einen ersten Teilabschnitt 29b und 29'b sowie 31b und 31'b auf. Entsprechend den ersten und zweiten Teilabschnitten 29a, 31a, 29'a, 31'a, sind auch die zweiten Teilabschnitte 29b, 29'b und 31b, 31'b zueinander unter einem stumpfen Winkel geneigt, wobei die an die Mittelachse 5 anschließenden Teilabschnitte 29b, 29'b unter einem steileren Winkel in Richtung auf die Umfangsfläche des Bohrers 1 abfallen als die weiter außen liegenden zweiten Teilabschnitte 31b und 31'b.

Die beiden Teilabschnitte 29b, 29'b und 31 b sowie 31'b gehen über eine Knicklinie 33b ineinander über.

Betrachtet man den in Figur 3 wiedergegebenen Bohrer 1 von rechts, so ergibt sich die in Figur 3a wiedergegebene Seitenansicht des Bohrers 1. Gleiche Teile sind mit gleichen Bezugsziffern versehen, sodass insofern auf die Beschreibung zu Figur 3 verwiesen wird.

Es zeigt sich, dass die erste Hauptschneide 3 im Wesentlichen parallel zur in Figur 3a senkrecht zur Bildebene verlaufenden Durchmesserlinie 9 und auch parallel zu einer Ebene angeordnet ist, die in einem Abstand zur Mittelachse 5 verläuft. Unterhalb der ersten Hauptschneide 3 liegt die erste Freifläche 15a mit dem ersten Teilabschnitt 29a und dem zweiten Teilabschnitt 31a. Diese beiden Abschnitte gehen über die Knicklinie 33a ineinander über. Erkennbar ist auch die zweite Freifläche 15b mit dem ersten Teilabschnitt 29b und dem zweiten Teilabschnitt 31 b. Diese beiden Abschnitte gehen über die Knicklinie 33b ineinander über. Es zeigt sich deutlich, dass gegenüber einer Ebene, auf der die Mittelachse 5 senkrecht steht, der zweite Teilabschnitt 31 b steiler nach außen zur Umfangsfläche 17 abfällt als der erste Teilabschnitt 29b.

Figur 3a zeigt noch die Abflachung 23, außerdem die Nebenschneide 19, die hier entlang einer gedachten Schraubenlinie verläuft, also nicht parallel zur Mittelachse 5. Der Nebenschneide 19 eilt bei Bearbeitung eines Werkstücks eine Führungsfase 20 nach.

Betrachtet man den in Figur 3 in Stirnseitenansicht dargestellten Bohrer 1 von unten, so ergibt sich die in Figur 3b wiedergegebene Seitenansicht, wobei hier nur der vordere Teil des Bohrers 1 wiedergegeben ist. Gleiche Teile sind mit gleichen Bezugsziffern versehen, sodass auf die Erläuterungen zu den Figuren 3 und 3a verwiesen wird.

Unterhalb der Mittellinie 5 ist in Figur 3b die sich an die Spitze 35 des Bohrers 1 anschließende Zentrums-Schneide 25' erkennbar, die Teil der Hauptschneide des Bohrers 1 ist. Die zugehörige Spanfläche 27' ist dem Betrachter zugewandt. Sie ist ein Teil der Abflachung 23', welche die Ausspitzung des Bohrers 1 darstellt, und geht über eine Knicklinie 36' in die Spanfläche 11' über. Besonders bevorzugt wird aber ein bogenförmiger Übergang.

An die Zentrums-Schneide 25' schließt sich die zweite Hauptschneide 3' mit der zugehörigen Spanfläche 11' an. Die zweite Hauptschneide 3' geht in die Nebenschneide 19' über. Zwischen der zweiten Hauptschneide 3' und der Nebenschneide 19' ist hier eine Kante 37 zu sehen. Es kann jedoch auch vorgesehen werden, dass die Hauptschneiden über einen Radius in die Nebenschneiden übergehen.

Das zur zweiten Nebenschneide 3' und zur Zentrums-Schneide 25' Gesagte gilt entsprechend für die punktsymmetrisch angeordnete erste Hauptschneide 3 und Zentrums-Schneide 25.

Oberhalb der Mittelachse 5 sind die erste Freifläche 15a und die zweite Freifläche 15b zu sehen, mit den zugehörigen Teilabschnitten 29a, 31a beziehungsweise 29b und 31 b. Auch ist die Knicklinie 33a der ersten Teilfläche 15a und die Knicklinie 33b der zweiten Teilfläche 15b erkennbar.

Figur 3b zeigt sehr deutlich, dass die Zentrums-Schneide 25' und die zweite Hauptschneide 3' ausgehend von der Spitze 35 des Bohrers 1 ineinander übergehen und unter dem gleichen konstanten auch als Spitzenwinkel bezeichneten Neigungswinkel gegenüber der Mittellinie 5 aufweisen.

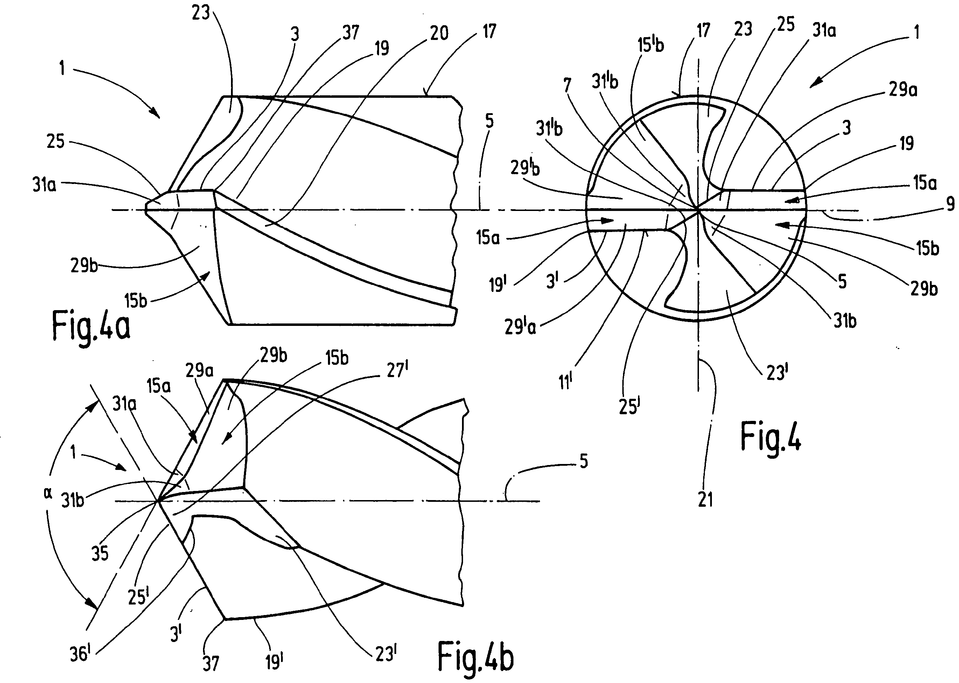

Figur 4 zeigt ein abgewandeltes Ausführungsbeispiel des in Figur 3 dargestellten Bohrers 1 in Stirnansicht. Gleiche Teile sind mit gleichen Bezugsziffern versehen, sodass insofern auf die Beschreibung zu den vorangegangenen Figuren verwiesen wird.

Der in Figur 4 wiedergegebene Bohrer 1 unterscheidet sich von dem in Figur 3 dargestellten lediglich dadurch, dass die Teilabschnitte 29a, 31a der ersten Freifläche 15a nicht über eine Knicklinie ineinander übergehen, sondern bogenförmig. Es ergibt sich also kein scharf definierter Absatz zwischen den beiden Teilabschnitten.

Entsprechendes gilt für die Teilabschnitte 29'a, 31'a der ersten Freifläche 15'a, die punktsymmetrisch zur Mittelachse 5 der ersten Freifläche 15a gegenüber liegt.

Dasselbe gilt auch für die zweiten Teilflächen 15b und 15'b: Die ersten Teilabschnitte 29b und 29'b gehen bogenförmig in die zweiten Teilabschnitte 31b und 31'b über, sodass auch hier kein Knick ausgebildet ist, sondern ein sanfter Übergang.

Betrachtet man den in Figur 4 in Stirnansicht dargestellten Bohrer 1 von rechts, so ergibt sich die in Figur 4a dargestellte Seitenansicht. Alles zu Figur 3a Gesagte gilt für diese Darstellung entsprechend.

Bei einer Unteransicht des in Figur 4 in Stirnansicht wiedergegebenen Bohrers 1 ergibt sich die in Figur 4 dargestellte Seitenansicht des Bohrers 1. Alles zu Figur 3b Gesagte gilt entsprechend für die Darstellung gemäß Figur 4b.

Auch aus den Darstellungen gemäß Figur 4a und Figur 4b ist ersichtlich, dass hier keine Knicklinien vorgesehen sind und dass die Teilabschnitte der Freiflächen bogenförmig ineinander übergehen.

Die in den Figuren 3, 3a und 3b erwähnten Knicklinien 33a und 33b entfallen also bei dem in den Figuren 4, 4a und 4b dargestellten Bohrer und werden durch einen bogenförmigen Übergang der Teilflächen ersetzt.

In Figur 4b ist der von den Hauptschneiden 3, 3' und den Zentrums-Schneiden 25, 25' eingeschlossene Spitzenwinkel α eingezeichnet, der aus Gründen der Übersichtlichkeit in Figur 3b nicht dargestellt.

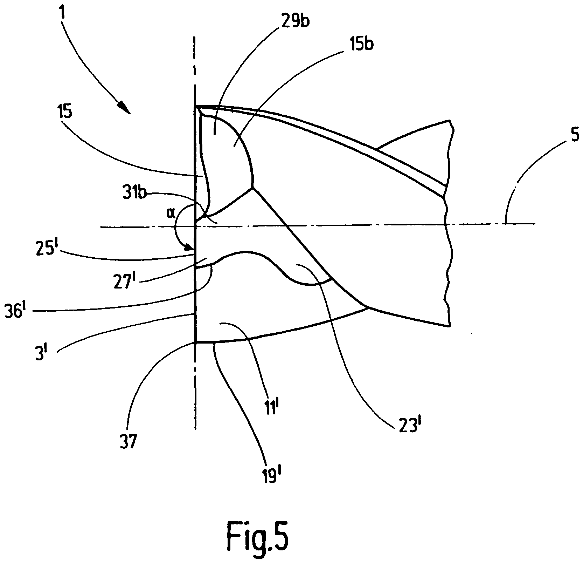

Figur 5 zeigt ein weiteres Ausführungsbeispiel eines Bohrers 1 in Seitenansicht. Diese Ansicht entspricht den Seitenansichten gemäß den Figuren 3b und 4b. Gleiche und funktionsgleiche Teile sind mit gleichen Bezugsziffern versehen, sodass auf die Beschreibung zu den vorangegangenen Figuren verwiesen wird. Bei dem besonders bevorzugten in Figur 5 dargestellten Ausführungsbeispiel des Bohrers ist vorgesehen, dass der Spitzenwinkel α 180° beträgt, dass also die beiden stirnseitigen Hauptschneiden 3 und 3' und die Zentrums-Schneiden 25, 25' des Bohrers in einer Ebene liegen, auf der die Mittelachse 5 senkrecht steht. Bei diesem Bohrer ist, anders als bei bekannten Bohrern, eine Spanflächenkorrektur nicht nötig, weil die Hauptschneiden, wie aus den Figuren 3 und 4 ersichtlich, cirka 5% bis 15% vor der Mitte liegen, also in der durch den Pfeil 13 angedeuteten Drehrichtung gesehen, vor der Durchmesserlinie 9 angeordnet sind. Dabei sind die ersten Freiflächen 15a und 15'a so gestaltet, dass sich auch bei gekrümmter, also im Bereich der Zentrums-Schneiden 25, 25' vor der Mitte liegenden Hauptschneide, ein absolut ebener Bohrungsgrund ergibt.

Oben wurde anhand der Figuren 3, 3a, 3b sowie 4, 4a und 4b dargelegt, dass die ersten und zweiten Teilabschnitte 29a, 29'a, 29b, 29'b und 31 a, 31'a sowie 31 b und 31'b über eine Knicklinie beziehungsweise einen bogenförmigen Bereich ineinander übergehen. Zusätzlich ist vorzugsweise vorgesehen, dass der Freiwinkel der Freiflächen vom Zentrum ausgehend, also ausgehend von der Mittelachse 5, zur Umfangsfläche 17 hin abnimmt. Durch diese Ausgestaltung können die besonders hoch belasteten Schneidenecken stabiler ausgebildet werden. Gleichzeitig ist im Zentrum des Bohrers so viel Freigang geschaffen, dass selbst sehr große Vorschübe mit diesem Bohrertyp möglich sind.

Eine weitere Entlastung der Schneidenecken kann dadurch erzielt werden, dass im Übergangsbereich zwischen den Hauptschneiden und Nebenschneiden die Kante 17 vermieden und ein Radius ausgebildet wird.

Figur 5 zeigt also einen Bohrer, bei dem der Spitzenwinkel α 180° beträgt. Eine Draufsicht auf die Stirnseite eines derartigen Bohrers entspricht der in Figur 3 wiedergegebenen Draufsicht. Insofern wird besonders auf diese Darstellung verwiesen.

Oberhalb der Mittellinie 5 sind in Figur 5 die erste Freifläche 15a und die zweite Freifläche 15b erkennbar, außerdem der erste Teilabschnitt 29b und der zweite Teilabschnitt 31 b dieser zweiten Freifläche 15b. Unterhalb der Mittellinie 5 sind die zweite Hauptschneide 3' und deren Teilabschnitt, die Zentrums-Schneide 25' zu sehen. Erkennbar sind auch die der zweiten Hauptschneide 3' zugeordnete Spanfläche 11' und die der Zentrums-Schneide 25' zugeordnete Spanfläche 27'. Diese Spanflächen sind durch eine Knicklinie 36' getrennt oder gehen über einen Bogen ineinander über.

Auch in dieser Darstellung wird, wie in den Figuren 3b und 4b, deutlich, dass die zweite Hauptschneide 3' und deren zugehöriger Schneidenabschnitt, nämlich die Zentrums-Schneide 25', ausgehend von der Mittellinie 5 unter dem gleichen - vorzugsweise stetigen - Spitzenwinkel geneigt sind, wobei zwischen der Zentrumsschneide 25' und dem zweiten Teilabschnitt 3' ein kontinuierlicher Übergang gegeben ist. In Figur 5 sind die Zentrumsschneide 25' und die zweite Hauptschneide 3' in einem Winkel von 90° zur Mittelachse 5 angeordnet. Entsprechendes gilt für die punktsymmetrische erste Hauptschneide mit dem zugehörigen Schneidabschnitt, der Zentrums-Schneide 25. Damit ergibt sich der Spitzenwinkel α von 180°.

Bei Verwendung des in Figur 5 dargestellten Bohrers 1 ergibt sich ein vollständig planer Bohrungsgrund. Aufgrund der speziellen Ausgestaltung der Ausspitzung, die durch die Abflachung 23' und die hier nicht ersichtliche Abflachung 23 realisiert ist, werden eine Verdichtung der von den Zentrums-Schneiden 25 und 25' abgetragenen Späne sicher vermieden. Diese können frei über die Spanfläche 27, 27' abfließen.

Es zeigt sich also, dass auf einfache Weise ein Bohrer geschaffen wird, der die im Stand der Technik bekannten Nachteile vermeidet. Bei den Ausführungsbeispielen gemäß den Figuren 3 und 4 wird sichergestellt, dass sich der Bohrer besonders in der Anbohrphase sehr gut zentriert. Dies wird durch die Ausspitzung, also durch die Spanflächen 23 und 23' erreicht, die zu einer Vergrößerung des Spitzenwinkels im Zentrumsbereich führen, was aus den Figuren 3a und 3b erkennbar wird. Gleichzeitig wird eine Verdichtung der hier abgetragenen Späne vermieden.

Die Vermeidung der Spanverdichtung ergibt sich auch bei dem Ausführungsbeispiel des Bohrers 1, wie er in Figur 5 dargestellt ist.

## Patentansprüche

1. Bohrer mit
- mindestens zwei stirnseitigen Hauptschneiden (3,3'),
- an diese angrenzenden, in einer ersten Richtung abfallenden Spanflächen (11,11'),
- an die mindestens zwei Hauptschneiden (3,3') angrenzenden, in entgegengesetzter Richtung zu den Spanflächen (11,11') abfallenden ersten Freiflächen (15a,15'a),
- mindestens zwei stirnseitigen Ausspitzungen, durch die jeweils eine an die Hauptschneiden (3,3') angrenzende Zentrums-Schneiden (25,25') gebildet werden, an die in der ersten Richtung abfallende Spanflächen (27,27') angrenzen,
- einer zwischen den mindestens zwei Zentrums-Schneiden (25,25') verlaufenden Querschneide (7) und mit
- im Bereich einer Umfangsfläche (17) des Bohrers (1) vorgesehenen Nebenschneiden (19,19'), wobei jeder Hauptschneide (3,3') eine Nebenschneide (19,19') zugeordnet ist, wobei
- die mindestens zwei Hauptschneiden (3,3') durch die Schnittlinie der Spanflächen (11,11') mit den ersten Freiflächen (15a,15'a) gebildet werden, und wobei
- die Spanflächen (11,11') der Hauptschneiden (3,3') und die Spanflächen (27,27') der Zentrums-Schneiden (25,25') in einem stumpfen Winkel zueinander angeordnet sind,
**dadurch gekennzeichnet, dass**
- die ersten Freiflächen (15a,15'a) Teilabschnitte (29a,29'a;31a,31'a) aufweisen, welche in einem stumpfen Winkel zueinander angeordnet sind, wobei
- die Teilabschnitte der ersten Freiflächen (15a,15'a) der Spanfläche (27,27') der Zentrums-Schneide (25,25') und der Spanfläche (11,11') der Hauptschneide (3,3') zugeordnet sind, wobei
- sich an die Hauptschneiden (3,3') Zentrums-Schneiden (25,25') anschließen, und wobei
- die ersten Freiflächen (15a,15'a) entgegengesetzt zu den Spanflächen (11,27) so abgewinkelt sind, dass die Hauptschneiden (3,3') und Zentrums-Schneiden (25,25') unter einem konstanten Spitzenwinkel α nach außen in Richtung auf eine Umfangsfläche (17) des Bohrers (1) verlaufen.

2. Bohrer nach Anspruch 1, **dadurch gekennzeichnet, dass** der Spitzenwinkel α ein stumpfer Winkel ist.

3. Bohrer nach Anspruch 1, **dadurch gekennzeichnet, dass** für den Spitzenwinkel α 0° ≤ α ≤ 180° gilt, insbesondere 120° ≤ α ≤ 180°.

4. Bohrer nach einem der vorhergehenden Ansprüche, **dadurch gekennzeichnet, dass** die innen liegenden Spanflächen (27,27') der Zentrums-Schneiden (25,25') weniger geneigt sind als die weiter außen liegenden Spanflächen (11,11') der Hauptschneide (3,3').

5. Bohrer nach einem der vorhergehenden Ansprüche, **dadurch gekennzeichnet, dass** die innen liegende Spanfläche (27,27') der Zentrums-Schneide (25,25') über einen Knick (Knicklinie (36,36')) oder über einen Bogen in die außen liegende Spanfläche (11,11') der Hauptschneide (3,3') übergeht.

6. Bohrer nach einem der vorhergehenden Ansprüche, **dadurch gekennzeichnet, dass** der innen liegende Teilabschnitt (31a,31'a) der ersten Freifläche (15a,15'a) einen größeren Freiwinkel aufweist als der außen liegende Teilabschnitt (29a,29'a) der zugehörigen Hauptschneide (3,3').

7. Bohrer nach Anspruch 6, **dadurch gekennzeichnet, dass** der innen liegende Teilabschnitt (31a,31'a) der ersten Freifläche (15a) über einen Knick (Knicklinie (33a,33'a)) oder über einen Bogen in den außen liegenden Teilabschnitt (29a,29'a) übergeht.

8. Bohrer nach einem der vorhergehenden Ansprüche, **dadurch gekennzeichnet, dass** sich der Freiwinkel der ersten Freiflächen (15a,15'a) von der Mittellinie (5) des Bohrers (1) nach außen verringert.

9. Bohrer nach Anspruch 8, **dadurch gekennzeichnet, dass** sich der Freiwinkel stetig verringert.

10. Bohrer nach einem der vorhergehenden Ansprüche, **gekennzeichnet durch** an die mindestens zwei ersten Freiflächen (15a,15'a) angrenzende zweite Freiflächen (15b,15'b), die stärker geneigt sind als die ersten Freiflächen.

11. Bohrer nach Anspruch 10, **dadurch gekennzeichnet, dass** die zweite Freifläche (15b,15'b) Teilabschnitte (29b,29'b,31b,31'b) aufweist, deren Anzahl der Anzahl der Teilabschnitte der ersten Freiflächen (15a,15'a) entspricht und die unter einem stumpfen Winkel zueinander angeordnet sind.

12. Bohrer nach Anspruch 10 oder 11, **dadurch gekennzeichnet, dass** der innen liegende Teilabschnitt (31b,31'b) der zweiten Freiflächen (15b,15'b) stärker geneigt ist als der außen liegende Teilabschnitt (29b,29'b).

13. Bohrer nach einem der Ansprüche 10 bis 12, **dadurch gekennzeichnet, dass** der innen liegende Teilabschnitt (31b,31'b) der zweiten Freifläche (15b,15'b) über einen Knick (Knicklinie (33b,33'b) oder über einen Bogen in den außen liegenden Teilabschnitt (29b,29'b) übergeht.

14. Bohrer nach einem der vorhergehenden Ansprüche 10 bis 13, **dadurch gekennzeichnet, dass** sich der Freiwinkel der zweiten Freiflächen (15b,15'b) von der Mittellinie (5) des Bohrers (1) nach außen verringert.

15. Bohrer nach Anspruch 14, **dadurch gekennzeichnet, dass** sich der Freiwinkel stetig verringert.

16. Bohrer nach einem der vorhergehenden Ansprüche, **dadurch gekennzeichnet, dass** die Hauptschneiden (3,3') über einen Radius in die Nebenschneiden (17,17') übergehen.

17. Bohrer nach einem der vorhergehenden Ansprüche, **gekennzeichnet durch** einen Spitzenwinkel α von 180°.

## Claims

1. A drill, with
- at least two end-face major cutting edges (3, 3'),
- faces (11, 11') contiguous to these and descending in a first direction,
- first flanks (15a, 15'a) contiguous to the at least two major cutting edges (3, 3') and descending in the opposite direction to the faces (11, 11'),
- at least two end-face taperings out, by means of each of which is formed a center cutting edge (25, 25') which is contiguous to the major cutting edges (3, 3') and to which faces (27, 27') descending in the first direction are contiguous,
- a chisel cutting edge (7) running between the at least two center cutting edges (25, 25'), and
- minor cutting edges (19, 19') provided in the region of a circumferential surface (17) of the drill (1), each major cutting edge (3, 3') being assigned a minor cutting edge (19, 19'),
- the at least two major cutting edges (3, 3') being formed by the line of intersection of the faces (11, 11') with the first flanks (15a, 15'a), and
- the faces (11, 11') of the major cutting edges (3, 3') and the faces (27, 27') of the center cutting edges (25, 25') being arranged at an obtuse angle to one another,
**characterized in that**
- the first flanks (15a, 15'a) have segments (29a, 29'a; 31 a, 31'a) which are arranged at an obtuse angle to one another,
- the segments of the first flanks (15a, 15'a) being assigned to the face (27, 27') of the center cutting edge (25, 25') and to the face (11, 11') of the major cutting edge (3, 3'),
- the major cutting edges (3, 3') having adjoining them center cutting edges (25, 25'), and
- the first flanks (15a, 15'a) being angled opposite to the faces (11, 27) so that the major cutting edges (3, 3') and center cutting edges (25, 25') run at a constant apex angle α outward in the direction of a circumferential surface (17) of the drill (1).

2. The drill as claimed in claim 1, **characterized in that** the apex angle α is an obtuse angle.

3. The drill as claimed in claim 1, **characterized in that** 0° ≤ α ≤ 180°, in particular 120° ≤ α ≤ 180°, applies to the apex angle α.

4. The drill as claimed in one of the preceding claims, **characterized in that** the inner faces (27, 27') of the center cutting edges (25, 25') are inclined to a lesser extent than the further-out faces (11, 11') of the major cutting edge (3, 3').

5. The drill as claimed in one of the preceding claims, **characterized in that** the inner face (27, 27') of the center cutting edge (25, 25') merges into the outer face (11, 11') of the major cutting edge (3, 3') via a bend (bending line (36, 36')) or via an arc.

6. The drill as claimed in one of the preceding claims, **characterized in that** the inner segment (31 a, 31'a) of the first flank (15a, 15'a) has a greater clearance angle than the outer segment (29a, 29'a) of the associated major cutting edge (3, 3').

7. The drill as claimed in claim 6, **characterized in that** the inner segment (31a, 31'a) of the first flank (15a) merges into the outer segment (29a, 29'a) via a bend (bending line (33a, 33'a)) or via an arc.

8. The drill as claimed in one of the preceding claims, **characterized in that** the clearance angle of the first flanks (15a, 15'a) decreases outward from the center line (5) of the drill (1).

9. The drill as claimed in claim 8, **characterized in that** the clearance angle decreases continuously.

10. The drill as claimed in one of the preceding claims, **characterized by** second flanks (15b, 15'b) which are contiguous to the at least two first flanks (15a, 15'a) and which are inclined to a greater extent than the first flanks.

11. The drill as claimed in claim 10, **characterized in that** the second flank (15b, 15'b) has segments (29b, 29'b, 31b,31'b), the number of which corresponds to the number of segments of the first flanks (15a, 15'a) and which are arranged at an obtuse angle to one another.

12. The drill as claimed in claim 10 or 11, **characterized in that** the inner segment (31b, 31'b) of the second flanks (15b, 15'b) is inclined to a greater extent than the outer segment (29b, 29'b).

13. The drill as claimed in one of claims 10 to 12, **characterized in that** the inner segment (31 b, 31'b) of the second flank (15b, 15'b) merges into the outer segment (29b, 29'b) via a bend (bending line (33b, 33'b)) or via an arc.

14. The drill as claimed in one of the preceding claims 10 to 13, **characterized in that** the clearance angle of the second flanks (15b, 15'b) decreases outward from the center line (5) of the drill (1).

15. The drill as claimed in claim 14, **characterized in that** the clearance angle decreases continuously.

16. The drill as claimed in one of the preceding claims, **characterized in that** the major cutting edges (3, 3') merge into the minor cutting edges (17, 17') via a radius.

17. The drill as claimed in one of the preceding claims, **characterized by** an apex angle α of 180°.

## Revendications

1. Foret comprenant
- au moins deux lames principales côté frontal (3, 3'),
- des faces de coupe (11, 11') adjacentes à celles-ci, tombant dans une première direction,
- des premières faces de dépouille (15a, 15'a) adjacentes aux au moins deux lames principales (3, 3'), tombant dans la direction opposée aux faces de coupe (11, 11'),
- au moins deux amincissements côté frontal à travers lesquels une lame centrale (25, 25') adjacente aux lames principales (3, 3') est à chaque fois formée, lames centrales auxquelles des faces de coupe (27, 27') tombant dans la première direction sont adjacentes,
- une lame transversale (7) s'étendant entre les au moins deux lames centrales (25, 25') et comprenant
- des lames secondaires (19, 19') prévues dans la région d'une surface périphérique (17) du foret (1), une lame secondaire (19, 19') étant associée à chaque lame principale (3, 3'),
- les au moins deux lames principales (3, 3') étant formées par la ligne de coupe des faces de coupe (11, 11') avec les premières faces de dépouille (15a, 15'a), et
- les faces de coupe (11, 11') des lames principales (3, 3') et les faces de coupe (27, 27') des lames centrales (25, 25') étant disposées à un angle obtus les unes des autres,
**caractérisé en ce que**
- les premières faces de dépouille (15a, 15'a) présentent des sections partielles (29a, 29'a; 31a, 31'a) qui sont disposées à un angle obtus les unes des autres,
- les sections partielles des premières faces de dépouille (15a, 15'a) étant associées à la face de coupe (27, 27') de la lame centrale (25, 25') et à la face de coupe (11, 11') de la lame principale (3, 3'),
- des lames centrales (25, 25') se raccordant aux lames principales (3, 3'), et
- les premières faces de dépouille (15a, 15'a) étant coudées à l'opposé des faces de coupe (11, 27) de telle sorte que les lames principales (3, 3') et les lames centrales (25, 25') s'étendent avec un angle du sommet constant α vers l'extérieur en direction d'une surface périphérique (17) du foret (1).

2. Foret selon la revendication 1, **caractérisé en ce que** l'angle du sommet α est un angle obtus.

3. Foret selon la revendication 1, **caractérisé en ce qu'**il est valable pour l'angle du sommet α 0° ≤ α ≤ 180°, notamment 120° ≤ α ≤ 180°.

4. Foret selon l'une quelconque des revendications précédentes, **caractérisé en ce que** les faces de coupe internes (27, 27') des lames centrales (25, 25') sont moins inclinées que les faces de coupe plus externes (11, 11') de la lame principale (3, 3').

5. Foret selon l'une quelconque des revendications précédentes, **caractérisé en ce que** la face de coupe interne (27, 27') de la lame centrale (25, 25') se transforme par l'intermédiaire d'un coude (ligne d'inflexion (36, 36')) ou par l'intermédiaire d'un arc en la face de coupe externe (11, 11') de la lame principale (3, 3').

6. Foret selon l'une quelconque des revendications précédentes, **caractérisé en ce que** la section partielle interne (31 a, 31'a) de la première face de dépouille (15a, 15'a) présente un angle de dépouille supérieur à la section partielle externe (29a, 29'a) de la lame principale (3, 3') associée.

7. Foret selon la revendication 6, **caractérisé en ce que** la section partielle interne (31a, 31'a) de la première face de dépouille (15a) se transforme par l'intermédiaire d'un coude (ligne d'inflexion (33a, 33a')) ou par l'intermédiaire d'un arc en la section partielle externe (29a, 29'a).

8. Foret selon l'une quelconque des revendications précédentes, **caractérisé en ce que** l'angle de dépouille des premières faces de dépouille (15a, 15'a) diminue vers l'extérieur depuis la ligne médiane (5) du foret (1).

9. Foret selon la revendication 8, **caractérisé en ce que** l'angle de dépouille diminue en continu.

10. Foret selon l'une quelconque des revendications précédentes, **caractérisé par** des secondes faces de dépouille (15b, 15'b) adjacentes aux au moins deux premières faces de dépouille (15a, 15'a) qui sont plus fortement inclinées que les premières faces de dépouille.

11. Foret selon la revendication 10, **caractérisé en ce que** la seconde face de dépouille (15b, 15'b) présente des sections partielles (29b, 29'b, 31b, 31'b) dont le nombre correspond au nombre de sections partielles des premières faces de dépouille (15a, 15'a) et qui sont disposées à un angle obtus les unes des autres.

12. Foret selon la revendication 10 ou 11, **caractérisé en ce que** la section partielle interne (31 b, 31'b) des secondes faces de dépouille (15b, 15'b) est plus fortement inclinée que la section partielle externe (29b, 29'b).

13. Foret selon l'une quelconque des revendications 10 à 12, **caractérisé en ce que** la section partielle interne (31 b, 31'b) de la seconde face de dépouille (15b, 15'b) se transforme par l'intermédiaire d'un coude (ligne d'inflexion (33b, 33'b)) ou par l'intermédiaire d'un arc en la section partielle externe (29b, 29'b).

14. Foret selon l'une quelconque des revendications précédentes 10 à 13, **caractérisé en ce que** l'angle de dépouille des secondes faces de dépouille (15b, 15'b) diminue vers l'extérieur depuis la ligne médiane (5) du foret (1).

15. Foret selon la revendication 14, **caractérisé en ce que** l'angle de dépouille diminue en continu.

16. Foret selon l'une quelconque des revendications précédentes, **caractérisé en ce que** les lames principales (3, 3') se transforment en les lames secondaires (17, 17') par l'intermédiaire d'un rayon.

17. Foret selon l'une quelconque des revendications précédentes, **caractérisé par** un angle du sommet α de 180°.
